Europäisches Patentamt

European Patent Office

Office européen des brevets

(19)

(11) Numéro de publication : **0 066 914**
**B1**

(12) **FASCICULE DE BREVET EUROPÉEN**

(45) Date de publication du fascicule du brevet :
28.08.85

(51) Int. Cl.⁴ : **D 06 F 39/08**

(21) Numéro de dépôt : **82200599.7**

(22) Date de dépôt : **17.05.82**

(54) Appareil électroménager du genre lave-linge ou lave-vaisselle avec dispositif d'alarme en cas de débordement ou fuite d'eau.

(30) Priorité : **20.05.81 FR 8110008**

(43) Date de publication de la demande :
**15.12.82 Bulletin 82/50**

(45) Mention de la délivrance du brevet :
**28.08.85 Bulletin 85/35**

(84) Etats contractants désignés :
**DE FR GB IT**

(56) Documents cités :
**DE-A- 2 820 470**
**US-A- 3 200 388**
**US-A- 3 492 449**
**US-A- 3 514 735**
**US-A- 3 770 002**

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB IT**

(72) Inventeur : **Steers, Michel**
**Société Civile S.P.I.D 209 rue de l'Université**
**F-75007 Paris (FR)**
Inventeur : **Hazan, Jean-Pierre**
**Société Civile S.P.I.D 209 rue de l'Université**
**F-75007 Paris (FR)**

(74) Mandataire : **Landousy, Christian et al**
**Société Civile S.P.I.D. 209, Rue de l'Université**
**F-75007 Paris (FR)**

EP 0 066 914 B1

Jouve, 18, rue St-Denis, 75001 Paris, France

## Description

La présente invention concerne un appareil électroménager du genre lave-linge ou lave-vaisselle muni d'un dispositif d'alarme indiquant un débordement ou une fuite d'eau à bord dudit appareil.

Les appareils électroménagers du genre de l'invention comportent des circuits d'eau qui peuvent fuire par manque d'étanchéité ou encore se boucher si bien qu'au cours de l'introduction de l'eau, il peut se produire des débordements. Ainsi, par exemple, dans les machines à laver du genre à hublot frontal pour introduction du linge, des fuites se produisent au niveau de ce hublot lorsque le joint est en mauvais état par suite, notamment, d'un long usage. Dans les machines à laver la vaisselle des fuites se produisent également au niveau des joints de la porte avec l'intérieur de la machine.

L'art antérieur décrit des dispositifs pour détecter les fuites ou débordements d'eau qui sont utilisables à bord d'appareils électroménagers du genre selon l'invention.

Le brevet US 3 200 388 décrit un dispositif d'alarme pour détecter les fuites d'eau pour des appareils domestiques en particulier un lave-linge. Ce document décrit une telle machine sous laquelle on a déposé un récipient destiné à collecter l'eau émanant d'une fuite ou d'un débordement d'eau de la machine. Dans ce récipient sont disposées deux électrodes isolées par une substance qui présente la propriété d'être altérée, voire détruite, lors du fonctionnement du dispositif en cas de fuite d'eau. La substance peut être par exemple du sucre et se dissoudre dans l'eau accumulée dans le récipient. La substance peut également se déformer en absorbant de l'eau telles que des fibres de cellulose imprégnées d'un sel électrolysable, auquel cas la substance après séchage peut être restaurée. La disparition ou l'altération de la substance va conduire à la situation suivante : les électrodes qui se trouvaient isolées par l'existence de cette substance se trouvent ainsi mises en contact ou au moins isolées par une résistance faible ce qui a pour but d'intervenir sur le dispositif d'alarme proprement dit constitué d'un transformateur. La variation de conduction électrique entre les deux électrodes est utilisée pour charger l'enroulement secondaire du transformateur ce qui modifie le flux magnétique dont les variations agissent sur une lame souple dont les vibrations servent d'alarme sonore.

La disposition des électrodes selon ce document présente un certain nombre d'inconvénients. Le récipient doit pouvoir collecter le mieux possible les eaux de fuite ou de débordement donc être largement dimensionné. Egalement de part sa nature même, le produit servant d'isolant est détruit lorsque le système se trouve être sollicité. Mais le plus ennuyeux est que la simple humidité de l'atmosphère peut déclencher intempestivement le dispositif. Il en est de même pour tout isolant, par exemple les fibres de cellulose imprégnées d'un sel, dont le pouvoir d'isolation peut être altéré en surface par une faible imprégnation d'eau. Dans ce cas également un fonctionnement peu fiable peut apparaître.

D'autre part, lorsque le système a été sollicité il y a lieu de lui restaurer ses propriétés initiales, soit en remplaçant l'isolant détruit, soit en desséchant celui qui est imprégné d'eau. Cette opération n'est pas nécessairement aisée pour un utilisateur moyen et complique l'utilisation de l'appareil.

Mais en dehors de ces fonctionnements erronés, selon l'usage normal prévu par l'art antérieur, il est nécessaire que l'eau recueillie atteigne un niveau suffisant pour atteindre les électrodes et déclencher le dispositif, ce qui peut se produire en retard par rapport à l'instant d'apparition d'une fuite. Ceci peut dans certains cas provoquer des dégâts si l'eau de fuite se répartit à la fois dans le récipient et à l'extérieur du récipient.

En ce qui concerne les dispositifs fondés sur l'apparition d'une conduction électrique entre deux électrodes, il faut compter avec le fait que l'appareil électroménager est souvent installé en atmosphère qui peut être humide et présenter des variations de température d'où formation d'une couche de condensation entre les deux électrodes à la suite de laquelle le système d'alarme présente l'inconvénient d'être déclenché intempestivement.

Le dispositif selon l'art antérieur décrit est relativement compliqué et élaboré, donc assez onéreux à mettre en œuvre à bord de ces appareils électroménagers, leur prix augmentant d'autant. Par ailleurs, ce dispositif mettant en œuvre la conduction électrique entre deux électrodes est peu sûr et sujet à de fausses alarmes compte tenu des lieux d'utilisation desdits appareils.

Au contraire, l'un des buts de l'invention est de munir ces appareils électroménagers de dispositifs peu chers, d'une réalisation sommaire et facilement insérables dans lesdits appareils. Un autre but encore est que ces dispositifs soient capables d'alarme avec fiabilité, donc pas déclenchés par des couches de condensation.

Les phénomènes utilisés selon l'invention pour la détection de fuite ou débordement sont aussi des phénomènes électrique de conduction ou capacitifs. Mais pour répondre à ces buts, les dispositifs proposés sont réduits notamment dans leur partie détectrice à leur plus simple expression, celle-ci ne devant pas prendre en charge une mesure de niveau d'eau avant débordement, mais seulement détecter qualitativement la présence d'eau immédiatement après le commencement du débordement ou de la fuite du circuit d'eau, c'est-à-dire très près du lieu de son apparition sans attendre qu'une quantité importante d'eau ne se soit écoulée.

Ainsi, un premier mode de réalisation de l'invention consiste en un appareil électroménager muni d'un système d'alarme en cas de débordement ou de fuite d'eau remarquable en ce qu'il comprend, pour la détection des fuites d'eau, une électrode placée à même la carrosserie sur le trajet de cheminement de l'eau de fuite, au-dessous des ouvertures d'accès, l'électrode étant isolée du bâti par un isolant, les variations de la conduction électrique ou de la capacité entre l'électrode et le bâti métallique agissant sur le système d'alarme qui avertit l'utilisateur en cas de fuite d'eau.

Selon un second mode de réalisation, le système d'alarme comporte une partie détection constituée d'une seule électrode entourée d'un diélectrique et fixée sur le bâti de la machine en un endroit sur le chemin de l'eau, et un circuit électrique avec source de courant connecté entre électrode et bâti et des moyens pour prélever entre deux points de ce circuit un signal en corrélation avec la variation d'effet capacitif entre électrode et bâti introduit par l'eau au contact du diélectrique en cas de débordement ou fuite et traiter puis acheminer ledit signal vers les moyens d'alarme.

Selon une première variante de ce premier mode de réalisation, pour laquelle l'appareil électroménager est une machine à laver le linge du genre à hublot frontal, l'électrode est plane et l'isolant constitué par la couche d'émail de la carrosserie de l'appareil et l'électrode est placée sur cette carrosserie en dessous dudit hublot. Dans ce cas, l'électrode est en particulier constituée d'un dépôt par sérigraphie d'encre conductrice à même l'émail de la carrosserie.

Selon une seconde variante de ce premier mode de réalisation, l'électrode est plane et l'isolant constitué par une lame de téflon, laquelle présente la particularité de ne pouvoir se recouvrir de buée donc évite tout déclenchement intempestif de l'alarme.

L'invention sera mieux comprise à l'aide de la description suivante de quelques modes de réalisation de l'invention donnés à titre d'exemples non limitatifs, ladite description étant accompagnée de dessins qui représentent :

Figure 1 un premier mode de réalisation de l'invention.

Figure 2 un second mode de réalisation de l'invention.

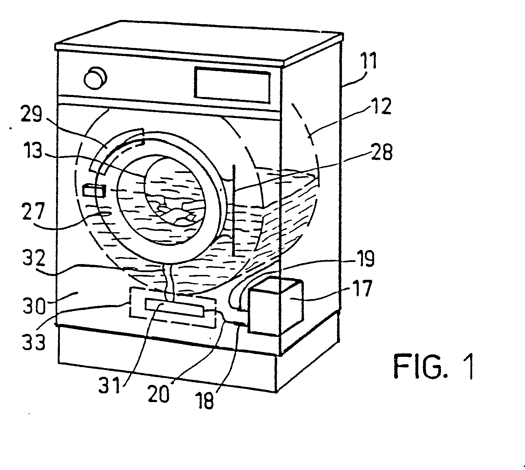

Sur la figure 1 est représenté sous le repère 11 l'extérieur du bâti d'une machine à laver le linge. A l'intérieur de ce bâti on distingue la cuve de lavage 12 et le tambour tournant 13. Cette machine est à chargement frontal, par la porte à hublot 27 mobile autour de l'axe 28 s'appliquant sur la face 30 de la carrosserie de la machine, l'étanchéité avec ladite carrosserie et la cuve 12 étant assurée au moyen du joint 29 circulaire représenté partiellement. Selon une première variante d'un premier mode de réalisation de l'invention, sur la face 30 de la carrosserie supposée recouverte d'une couche d'émail isolant électrique et en dessous de la porte à hublot 27 est disposée l'électrode 31, laquelle est reliée à la corne 18 du boîtier 17. Lorsque par exemple le joint 29 est en mauvais état, il se produit une fuite d'eau représentée par le filet 32. L'électrode initialement isolée du bâti se trouve alors reliée électriquement à celui-ci par l'intermédiaire de l'eau si bien qu'il en résulte dans le boîtier 17 un signal électrique pour provoquer une alarme. D'une façon avantageuse et peu onéreuse, l'électrode 31 est réalisée par un dépôt conducteur d'encre sérigraphiable à même l'émail de la face 30.

Selon une seconde variante, on envisage aussi le cas où la machine à laver est placée dans un endroit humide et présentant des variations de températures. On peut alors craindre l'apparition de buées qui établissent la conduction électrique entre électrode et bâti avec déclenchement de fausse alarme. Pour éviter ces phénomènes, l'isolant électrique est choisi pour se recouvrir difficilement de buée mais par contre se recouvrir d'eau en cas de fuite (ce qui veut dire faible tension superficielle de l'eau sur ledit isolant). Cet isolant électrique est avantageusement sous forme d'une feuille de téflon. Dans le même esprit, sur la figure 1, pour éviter une fausse alarme par dépôt de buée sur l'émail de la carrosserie, une feuille 33 de téflon représentée en pointillés est intercalée entre l'électrode 31 et la face 30.

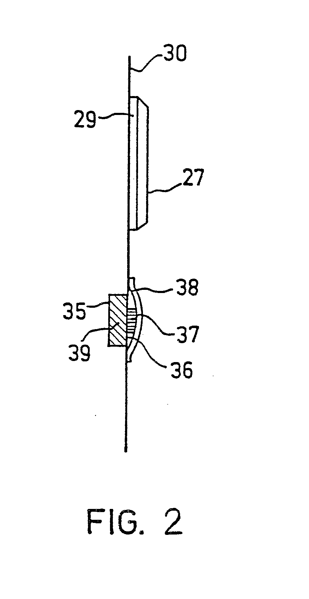

Sur la figure 2 est représentée partiellement, en coupe verticale perpendiculaire à la face 30 selon le diamètre du hublot 27, une machine à laver le linge du genre à hublot représentée à la figure 1. On retrouve la face 30 de la carrosserie selon la figure 1, puis le hublot 27 et le joint 29. Cette face 30 comporte un renflement 35, lequel est rempli d'un bloc de matière isolante électrique 39. Sur la face 36 du bloc de cette matière isolante qui affleure le plan de la face 30 est placée l'électrode 37, laquelle est recouverte d'une couche de diélectrique 38 (en téflon par exemple) débordant sur la face 30 d'une façon étanche, la constante diélectrique de 38 étant du même ordre de grandeur que celui de 39. L'électrode 37 se trouve ainsi enfermée au milieu d'un bloc de diélectrique de section très dissymétrique. La machine à laver le linge comprend un bloc analogue au bloc 17 de la figure 1, l'électrode 37 étant reliée à l'une des bornes de ce bloc, tandis que l'autre est reliée au bâti, la source de courant à l'intérieur dudit bloc étant de type alternatif. En l'absence de fuite d'eau, la capacité entre l'électrode 37 et le bâti (face 30), est en rapport avec l'épaisseur d'isolant électrique dans le renflement 35, tandis qu'en cas de fuite d'eau en provenance du joint 29, elle est en rapport avec celle de la couche de diélectrique 38 donc plus élevée du fait de l'épaisseur plus faible de cette couche par rapport à celle dudit isolant électrique. Le signal dû à cette variation de capacité dans le bloc 17 sert à déclencher l'alarme.

Il va de soi que ne viennent d'être décrites que quelques variantes de l'invention et que l'homme de l'art sans se départir de l'esprit de l'invention, pourra en concevoir d'autres qui font partie intégrante de l'invention.

## Revendications

1. Appareil électroménager du genre lave-linge ou lave-vaisselle comprenant, dans un bâti métallique ayant une carrosserie en métal émaillé, un circuit d'eau, des joints d'étanchéité aux ouvertures d'accès pour éviter les fuites d'eau issues du circuit d'eau, et un système d'alarme en cas d'apparition de fuites d'eau, caractérisé en ce qu'il comprend, pour la détection des fuites d'eau, une électrode placée à même la carrosserie sur le trajet de cheminement de l'eau de fuite, au-dessous des ouvertures d'accès, l'électrode étant isolée du bâti par un isolant, les variations de la conduction électrique ou de la capacité entre l'électrode et le bâti métallique agissant sur le système d'alarme qui avertit l'utilisateur en cas de fuite d'eau.

2. Appareil électroménager selon la revendication 1, caractérisé en ce que l'isolant est constitué d'une lame de téflon.

3. Appareil électroménager selon la revendication 1, caractérisé en ce qu'il est du genre lave-linge avec hublot frontal pour le chargement de linge, et en ce que l'électrode est nue et placée en dessous dudit hublot, l'isolant électrique entre l'électrode et le bâti étant constitué par l'émail de la carrosserie.

4. Appareil électroménager selon la revendication 3, caractérisé en ce que l'électrode est constituée d'un dépôt par sérigraphie d'encre conductrice sur l'émail de la carrosserie.

5. Appareil électroménager selon la revendication 1, caractérisé en ce qu'il est du genre lave-linge avec hublot frontal pour le chargement du linge, et en ce que l'électrode entourée d'un isolant d'épaisseur dissymétrique est placée sur la carrosserie en dessous dudit hublot.

6. Appareil électroménager selon la revendication 5, caractérisé en ce que l'électrode entourée d'un isolant est placée dans une encoche aménagée dans la carrosserie.

## Claims

1. An electrical household apparatus, such as a washing machine or a dish-washer, comprising, in a metal frame with an enamelled metal housing, a water circuit, seals for the access openings to preclude the leakage of water which issues from the water circuit, and a water-leakage alarm system, characterized in that, for the detection of water leakage, it comprises an electrode arranged on the housing, below the access openings in the flow path of the leakage water, which electrode is insulated from the frame by an insulator, variations in the electrical conduction or the capacitance between the electrode and the metal frame influencing the alarm system to warn the user in the event of leadkage.

2. An electrical household apparatus as claimed in Claim 1, characterized in that the insulator is a teflon strip.

3. An electrical household apparatus as claimed in Claim 1, characterized in that it is a laundry washing machine with a front door for loading it with laundry, and the electrode is bare and arranged below said door, the electrical insulator between the electrode and the frame being constituted by the enamel on the housing.

4. An electrical household apparatus as claimed in Claim 3, characterized in that the electrode is constituted by a silk-screened layer of conductive ink on the enamel of the housing.

5. An electrical household apparatus as claimed Claim 1, characterized in that it is a laundry-washing machine with a front door for loading it with laundry, and the electrode, which is surrounded with an insulator of asymmetrical cross-section, is arranged on the housing below said door.

6. An electrical household apparatus as claimed in Claim 5, characterized in that the electrode, surrounded with an insulator, is arranged in a recess in the housing.

## Patentansprüche

1. Elektrisches Haushaltgerät, wie z. B. eine Wasch- oder Geschirrspülmaschine, mit einem Wasserkreislauf in einem Metallgestell mit einer emaillierten Metallauskleidung, mit Dichtungen bei den Zutrittsöffnungen zur Verhinderung von Wasserauslauf aus dem Wasserkreislauf sowie mit einer Wasserauslauf-Alarmanlage, dadurch gekennzeichnet, dass diese Alarmanlage für die Wasserauslaufdetektierung eine unter den Zutrittsöffnungen angebrachte Elektrode auf der Auskleidung im Weg des Wasserauslaufs enthält, die mittels einer Isolierung vom Gestell isoliert ist, wobei die Schwankungen in der elektrischen Leitung oder in der Kapazität zwischen der Elektrode und dem Metallgestell auf die Alarmanlage einwirken, die demzufolge bei Wasserauslauf den Benutzer warnt.

2. Elektrisches Haushaltgerät nach Anspruch 1, dadurch gekennzeichnet, dass die Isolierung aus einer dünnen Teflonplatte besteht.

3. Elektrisches Haushaltgerät nach Anspruch 1, dadurch gekennzeichnet, dass es eine Waschmaschine vom Frontladertyp ist, und dass die Elektrode nicht überzogen und unter der Fronttür angeordnet ist, wobei die elektrische Isolierung zwischen der Elektrode und dem Gestell durch das Email der Auskleidung gebildet wird.

4. Elektrisches Haushaltgerät nach Anspruch 3, dadurch gekennzeichnet, dass die Elektrode aus einer durch Siebdruck eines leitenden Farbstoffes auf dem Email der Auskleidung gebildet wird.

5. Elektrisches Haushaltgerät nach Anspruch 1, dadurch gekennzeichnet, dass es eine Waschmaschine vom Frontladertyp ist, und dass die von einer Isolierung mit asymmetrischer Dicke umgebene Elektrode auf der Auskleidung unter der Fronttür angeordnet ist.

6. Elektrisches Haushaltgerät nach Anspruch 5, dadurch gekennzeichnet, dass die von einer Isolierung umgebene Elektrode in einer Aussparung in der Auskleidung angebracht ist.

FIG. 1

FIG. 2